# EUROPEAN PATENT SPECIFICATION

(11) **EP 1 259 364 B1**
(45) Date of publication and mention of the grant of the patent: **07.06.2006**
(21) Application number: 00974802.1
(22) Date of filing: 26.10.2000
(51) Int. Cl.: B29C 33/00, B29C 44/58

(54) **A MOLDING MACHINE FOR POLYSTYRENE ELEMENTS WITH STEAM FEED IN THE LOWER PART OF THE MOLD AND CONDENSATE DRAINAGE SYSTEM IN THE SAME PIPE**
GIESSMASCHINE FÜR POLYSTYROLELEMENTEN MIT DAMPFZUFUHR AM UNTEREN TEIL DES FORMES UND KONDENSATABFLUSSSYSTEM IN DEM GLEICHEN ROHR
MACHINE A MOULER DESTINEE A LA FABRICATION D'ELEMENTS EN POLYSTYRENE, DOTEE D'UN TUYAU D'ARRIVEE VAPEUR DANS LA PARTIE INFERIEURE DU MOULE, ET SYSTEME DE DRAINAGE DE CONDENSATS DANS LE MEME TUYAU

(30) Priority: 28.10.1999 IT PG990062
(43) Date of publication of application: 27.11.2002
(73) Proprietor: Polimate - S.r.l., 06089 Torgiano (IT)
(72) Inventor: GORI, Giancarlo, I-06100 Perugia (IT); PASCIUTI, Andrea, I-06100 Perugia (IT)
(74) Representative: Baldi, Claudio
(86) International application number: PCT/IT2000/000432
(87) International publication number: WO 2001/030554

(56) References cited:
- EP-A- 0 259 597
- EP-A- 0 714 744
- US-A- 4 382 757
- US-A- 5 173 307

## Description

In molding machines for polystyrene elements, molding is obtained through granule sintering with steam. Steam is introduced in the chamber with suitable pressure and temperature and transfers its energy to the polystyrene granules that increase in volume, thus realizing peripheral microcasting. Microcasting reciprocally binds the granules until an object having the shape and size of the chamber generated by the two die halves is obtained.

By transferring energy to polystyrene, steam changes its physical state and turns into water, creating condensation.

The purpose of the present invention is to overcome the problems related to the current feed systems of process fluids, that is steam, water and air.

The US patent No. 5,173,307 describes a mold for rebonding foam where the heat is supplied to the mold in the form of steam. Said mold comprises a bottom fixed die half and a top moving die half. A steam chamber is created beneath the fixed die half; this chamber intercommunicates with the fixed die half thanks to a series of threading holes that allows for the passage of the steam. Said chamber is provided with two different ducts, a steam inlet for the introduction of steam and a drain line for the drainage of condensate. The mold described in the U.S. Patent No. 5,173,307 does not provide for the introduction of steam and the drainage of condensate on the moving die half. Moreover, in said U.S. patent, the steam chamber is not even used to introduce into the mold the air necessary to eject the molded polystyrene objects.

The machines that are currently available on the market show that steam feed towards the molding chamber is obtained in two different sections of the installation. The first section with rigid pipes serves the fixed die half, and the second section with rigid and flexible pipes serves the moving die half.

The same considerations can be made for the drainage circuits of condensate and other process fluids.

Typically, steam and air are introduced in the upper part of the mold, both in the fixed and moving part, while condensate is collected in the lower part of the mold.

Therefore, the two circuits are different and placed in diametrically opposite position with respect to the horizontal axis of the mold.

This machine presents the following disadvantages and limitations:
a) the need for separate installations for the various process fluids, resulting in an increase of industrial as well as maintenance and management costs;
b) pipes are present both on the upper part of the machine (steam, ejection air and vent) and the lower part of the machine (condensate evacuation and cooling vacuum), thus limiting the access to the machine and requiring more space space;
c) thermal non-homogeneity inside the molding chamber: going from up downward and transferring energy to the material to be molded, steams turns into water and condensate tends to accumulate in the lower part, creating a temperature gradient between this part and the upper part of the mold.

The purpose of the present invention is a molding machine for expanded polystyrene objects in which the ducts used for the introduction of steam inside the mold are inserted in the two die halves under their central horizontal axis, preferably on their lower horizontal edge; it being also provided that the ducts are also used to drain condensate, ejection air, vents and chamber vacuum, that is all of the process fluids.

A series of valves located on the fixed part of the machine and suitably actuated control the passage of the process fluids in the same pipe.

The main advantages of the invention are:
a) elimination of the ducts on the top part of the machine, resulting in a considerable reduction in costs and space;
b) uniform temperature distribution inside the mold; once introduced inside the chamber, steam tends to rise; it transfers energy to the polystyrene granules and changes its physical state, turning into water; because of gravity, the small condensate water particles tend to descend towards the lower part of the mold, encountering steam with higher and higher energy; the balance between these two phenomena inside the mold creates practically uniform temperature and humidity distribution conditions; these conditions allow for molding objects with high physical and structural homogeneity.

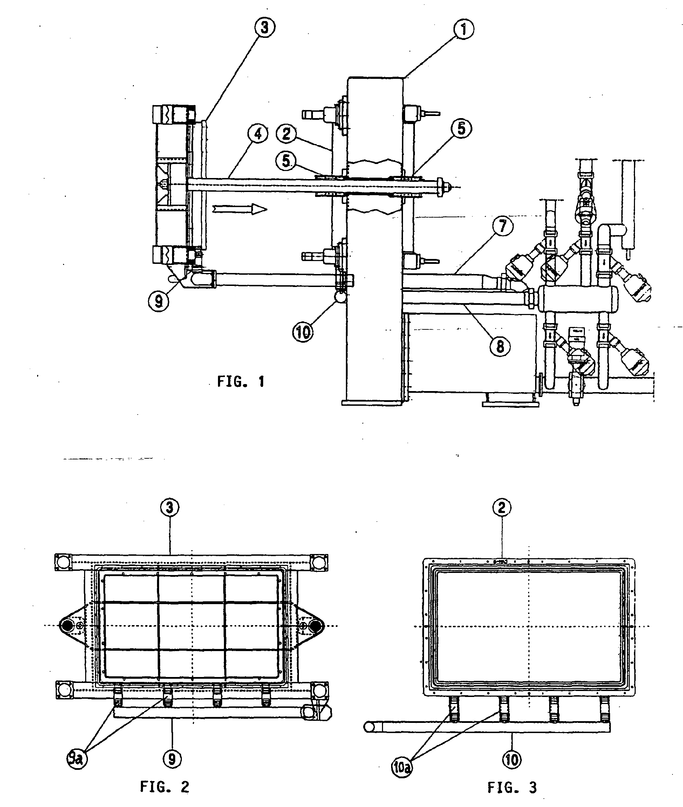

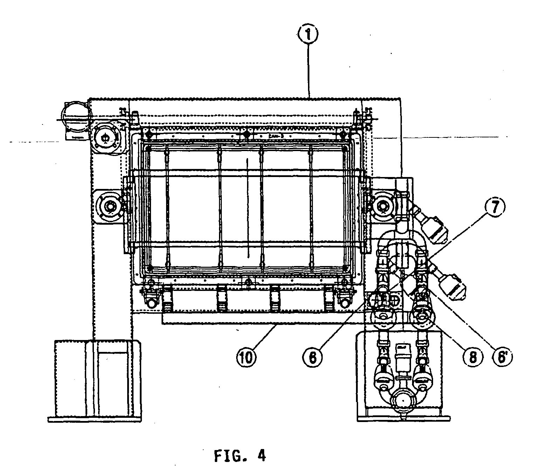

The text continues with a detailed description of the operating principle of the present invention, with reference to drawings as per Figs. 1 to 4.
Figure 1 is a schematic lateral view of the machine according to the present invention, with the two die halves open.
Figure 2 is a front view of the moving die half with distribution header and feed pipe.
Figure 3 is a front view of the fixed die half with distribution header and feed pipe.
Figure 4 is a rear view of the machine showing valves and with headers.

The solution illustrated in the aforementioned figures is to be considered as a schematic representation of a purely illustrative, non-restrictive solution. The possibility of using the invention in other fields of application is not ruled out.

With reference to the aforementioned figures, the machine is basically composed of a frame or base (1), which represents its bearing structure, and two die halves, one fixed (2) and one moving (3). The union of the two die halves (2, 3) generates the molding chamber for the polystyrene elements and is obtained by moving the moving die half (3) towards the fixed die half (2) along a generally horizontal direction.

The closing of the die halves includes two different steps: first, the moving die half (3) advances towards the fixed die half (2) until they touch and then the die halves are locked.

The fixed die half (2) is joined to the frame (1), while the moving die half (3) is connected to two lateral cylindrical bars (4) acting as support and slide guide.

The bars (4) joined to the moving die half (3) axially slide within a pair of ball bearings (5) fixed to the frame (1).

Once the two die halves have been locked, the polystyrene granules can be injected inside the chamber until they fill it.

The injection of steam inside the mold generates sintering or microcasting between the material granules. Microcasting reciprocally binds the granules until an object having the shape and size of the chamber generated by the two die halves is obtained.

With particular reference to the circuit of the moving die half (3), the circuit is composed of a series of valves (6) through which the fluid reaches the pipe (7). From here, by means of other flexible or telescopic pipes, it reaches the distribution header (9) that feeds some ducts with vertical axis (9a) inserted on the lower horizontal edge of the moving die half (3).

As regards the fixed die half (2), the circuit is composed of a series of valves (6') through which the fluid reaches the pipe (8) and from here the distribution header (10) that feeds some ducts (10a) with vertical axis inserted on the lower horizontal edge of the fixed die half (2).

Successively the same pipes are used for cooling, evacuating the condensate by means of vacuum.

Once molding has been completed, the two die halves are unlocked and the moving die half can be moved away in order to eject the molded object. This operation requires the introduction of air with pressure by means of the same pipe.

The cycle illustrated above can be operated in a cyclic mode.

By means of a control board, the operator carries out the management and control operations of the machine.

In summary, steam is introduced in the fixed (2) and moving die half (3) from the lower part by means of a single series of ducts (10a, 9a), which is also used to drain condensate, ejection air, vents and chamber vacuum, that is all of the process fluids. A series of valves located on the fixed part of the machine controls the passage of the process fluids in the same duct.

The feed system of the process fluids illustrated above is a functional application that can be used in polystyrene molding regardless of the machine size and architecture. This description represents an applicative, non-limitative example.

## Claims

1. A molding machine for polystyrene elements, of the type comprising a mold made up of a fixed die half (2) and a moving die half (3) designated for the introduction of steam flows with high temperature, that are introduced into and drained from the mold by means of suitable ducts (10a,9a) respectively inserted under the central horizontal axis of the fixed (2) and moving (3) die half; **characterized in that** the ducts (10a, 9a) used to introduce and drain steam are also used to drain condensate from inside the mold; and **in that** a series pf valves is located on the fixed part of the machine to control the passage of the process fluids in the duct.

2. Machine according to claim 1, **characterized by** the fact that the ducts (10a,9a) are respectively inserted on the lower horizontal edge of the moving die half (3) and on the lower horizontal edge of the fixed die half (2).

3. Machine according to claims 1 and 2, **characterized by** the fact that the ducts (10a,9a) used to introduce and drain steam are also used to introduce the air necessary to eject the molded polystyrene objects into the mold; and in that a series of valves is located on the fixed part of the machine to control the passage of the process fluids in the duct*.*

## Patentansprüche

1. Maschine für die Formung von Elementen aus Polystyrol, welche sich eines Formungsgesenks bedient, welches aus einem festen Halbgesenk (2) und einem beweglichen Halbgesenk (3) besteht, welche zusammenwirken und dazu bestimmt sind, von heißem Dampf durchströmt zu werden, welcher mittels entsprechenden Rohrleitungen (10a, 9a) in das Gesenk eingeleitet und beseitigt wird, welche Rohrleitungen unterhalb der horizontalen Halbachse des festen Halbgesenks (2) und des beweglichen Halbgesenks (3) eingekuppelt sind, **dadurch gekennzeichnet, dass** die Rohrleitungen zum Einleiten und Beseitigen des Dampfes (9a, 10a) auch zur Beseitigung des Kondenswassers im Innern des Gesenks verwendet werden und außerdem **dadurch gekennzeichnet, dass** die Steuerung der Prozessströmungsmittel in den Rohrleitungen durch Öffnen und Schließen einer Reihe von Ventilen erfolgt, welche sich im festen Maschinenteil befinden.

2. Maschine gemäß Anspruch 1, **dadurch gekennzeichnet, dass** die Rohrleitungen (9a, 10a) jeweils an der unteren horizontalen Kante des beweglichen Halbgesenks (3) und an der unteren horizontalen Kante des festen Halbgesenks (2) angekuppelt sind.

3. Maschine gemäß Anspruch 1 und 2, **dadurch gekennzeichnet, dass** die Rohrleitungen zum Einleiten und Beseitigen des Dampfes (9a, 10a) dazu verwendet werden, ins Innere des Gesenks auch die Luft einzuleiten, die zum Entformen der gerade geformten Elemente aus Polystyrol erforderlich ist und außerdem **dadurch gekennzeichnet, dass** die Steuerung der Prozessströmungsmittel in den Rohrleitungen durch Öffnen und Schließen einer Reihe von Ventilen erfolgt, welche sich im festen Maschinenteil befinden.

## Revendications

1. Machine pour le formage d'éléments en polystyrène, du type comprenant un moule de formage constitué d'un demi-moule fixe (2) et d'un demi-moule mobile (3) coopérants entre eux et destiné à être traversé par des flux de vapeur à température élevée, flux introduits et évacués par le dit moule par le biais de conduits (10a, 9a) prévus à cet effet et respectivement fixés au-dessous de l'axe horizontal positionné au milieu du demi-moule fixe (2) et du demi-moule mobile (3) ; **caractérisée en ce que** les dits conduits d'introduction et d'évacuation de la vapeur (9a, 10a) sont également utilisés pour évacuer la condensation qui se forme à l'intérieur du moule et **en ce que** la gestion du passage des fluides de processus dans le conduit s'effectue par le biais de l'ouverture et de la fermeture d'une série de soupapes positionnées sur la partie fixe de la machine.

2. Machine selon la revendication 1, **caractérisée en ce que** les dits conduits (9a, 10a) sont respectivement fixés en correspondance du bord horizontal inférieur du demi-moule mobile (3) et en correspondance du bord horizontal inférieur du demi-moule fixe (2).

3. Machine selon les revendications 1 et 2, **caractérisée en ce que** les dits conduits d'introduction et d'évacuation de la vapeur (9a, 10a) sont utilisés pour introduire également l'air nécessaire à favoriser l'éjection des éléments en polystyrène à peine formés dans le moule même et **en ce que** la gestion du passage des fluides de processus dans le conduit s'effectue par le biais de l'ouverture et de la fermeture d'une série de soupapes positionnées sur la paroi fixe de la machine.
